# EUROPEAN PATENT APPLICATION

(11) **EP 4 748 652 A1**
(43) Date of publication of application: **27.05.2026**
(21) Application number: 24885468.9
(22) Date of filing: 18.10.2024
(51) Int. Cl.: B60R 19/34, F16F 7/00, F16F 7/12

(54) **BUMPER STRUCTURE FOR VEHICLE**

(30) Priority: 31.10.2023 JP 2023186367
(71) Applicant: Toyoda Iron Works Co., Ltd., Toyota-shi, Aichi 471-8507 (JP)
(72) Inventor: RYUTAKI, Kozo, Toyota-shi, Aichi 471-8507 (JP); YAMAMOTO, Akiyoshi, Toyota-shi, Aichi 471-8507 (JP); USHIDA, Shinji, Toyota-shi, Aichi 471-8507 (JP); NAKAYAMA, Takeshi, Toyota-shi, Aichi 471-8507 (JP); IGUCHI, Miyu, Toyota-shi, Aichi 471-8507 (JP); SHIBATA, Goki, Toyota-shi, Aichi 471-8507 (JP)
(74) Representative: Zimmermann, Tankred Klaus
(86) International application number: PCT/JP2024/037106
(87) International publication number: WO 2025/094694

(57) **Abstract**

One embodiment is a bumper structure 10 for a vehicle, which has a bumper reinforcement 14 and a crash box member 18. A bumper reinforcement end portion 14A having an open cross-sectional shape and the crash box member 18 having an open cross-sectional shape are joined with facing each other to form a tubular or a substantially closed impact absorbing portion, the crash box member 18 has at least one deformation starting point which serves as a starting point of deformation of the impact absorbing portion when receiving an impact load upon collision, and by also deforming the bumper reinforcement end portion 14A along with deformation of the crash box member 18 starting from the deformation starting point, the impact load is absorbed by the impact absorbing portion formed by both the crash box member 18 and the bumper reinforcement end portion 14A.

## Description

### TECHNICAL FIELD

The present technique relates to a bumper structure for a vehicle.

### BACKGROUND ART

A vehicle may be provided with crash boxes between both end portions of a bumper reinforcement extending in a vehicle width direction and a vehicle body frame member. When an impact load is input to the bumper reinforcement due to collision, the impact load is transmitted to the crash box, and the crash box is irreversibly deformed to absorb the impact load.

### SUMMARY OF INVENTION

The bumper structure as described above is disclosed in, for example, JP-A-2022-12132. The bumper reinforcement in the bumper structure is a structural member which receives the impact load upon collision, and it is not assumed that the bumper reinforcement itself actively deforms and absorbs the impact. The impact load is absorbed by the deformation of the crash box to which the impact load is transmitted from the bumper reinforcement. Thus, the bumper reinforcement itself has a closed cross section over the entire length thereof, which leads to an increase in weight of the bumper structure. There has been a demand for a further increase in an energy absorption amount upon collision and reduction in weight of the bumper structure.

One technical aspect disclosed in the present application is a bumper structure for a vehicle, which includes a bumper reinforcement extending in a vehicle width direction, and a crash box member provided between each end portion of the bumper reinforcement and a vehicle body frame member. The end portion of the bumper reinforcement has an open cross-sectional shape with only one of the front side or the rear side opened, the crash box member has an open cross-sectional shape with only one of the rear side or the front side opened, and the end portion of the bumper reinforcement and the crash box member are joined with facing each other to form a tubular or substantially closed impact absorbing portion. The crash box member has at least one deformation starting point which serves as a starting point of deformation of the impact absorbing portion when receiving an impact load upon collision. By also deforming the end portion of the bumper reinforcement along with deformation of the crash box member starting from the deformation starting point, the impact load is absorbed by the impact absorbing portion formed by both the crash box member and the end portion of the bumper reinforcement.

### BRIEF DESCRIPTION OF DRAWINGS

Fig. 1 is a schematic view of a vehicle body of an automobile including a bumper according to one embodiment.
Fig. 2 is a perspective view of a bumper structure according to one embodiment as viewed diagonally from the rear left.
Fig. 3 is a cross-sectional view taken along line III-III of the bumper structure in Fig. 2.
Fig. 4 is a cross-sectional view taken along line IV-IV of the bumper structure in Fig. 2.
Fig. 5 is a partially enlarged view showing an attachment state in which the bumper structure according to the present embodiment is attached via an attachment member on a vehicle body frame member side.
Fig. 6 is a cross-sectional view schematically showing a deformation behavior when an impact load is input to the vehicle to which the bumper structure according to the present embodiment is applied.

### DESCRIPTION OF EMBODIMENTS

Various embodiments will be described hereinafter with reference to the drawings.

### <Bumper Structure for Automobile>

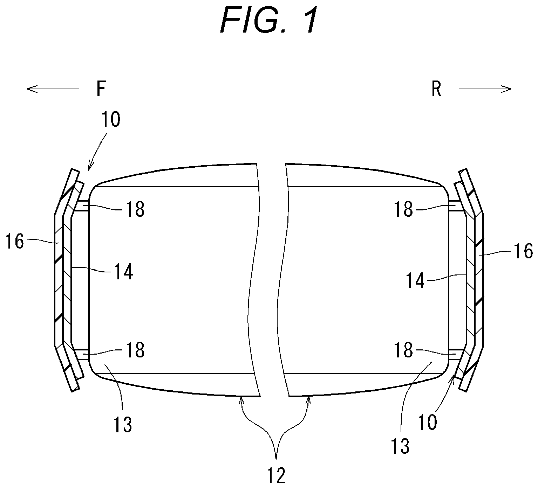

Fig. 1 schematically shows a bumper structure 10 for an automobile as one embodiment for receiving a collision load upon collision. The bumper structure 10 is usually disposed at each of a front portion and a rear portion of a vehicle body 12 of the automobile along the width direction of the automobile. In Fig. 1, the front of the automobile is indicated by an arrow F, and the rear is indicated by an arrow R. In the following description, the bumper structure 10 will be described as being disposed at the front portion of the vehicle body 12. However, as another embodiment, the same features as those described below can also be applied to a bumper structure disposed at the rear portion of the vehicle body 12.

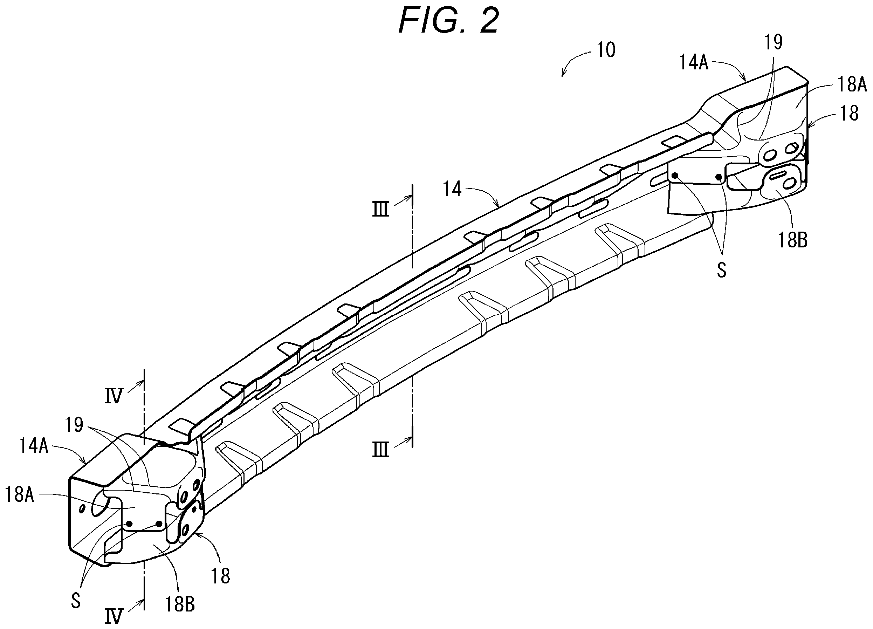

As shown in Figs. 1 and 2, the bumper structure 10 has a bumper reinforcement 14 and a crash box member 18. The bumper reinforcement 14 functions as a core material in terms of the strength of the bumper structure 10. The bumper reinforcement 14 is disposed along the width direction of the automobile, and is supported by a vehicle body frame member 13 (a side member or the like extending in a front-rear direction) of the automobile via the crash box member 18 at both end portions 14A. A bumper covering member 16 is disposed so as to cover the outer side (front surface) of the bumper reinforcement 14. The bumper covering member 16 is located on the outermost surface of the bumper structure 10, and is designed mainly in consideration of the appearance of the automobile. The bumper covering member 16 is usually made of resin suitable for molding a design.

The crash box member 18 includes crash box members 18 disposed between the vehicle body frame member 13 of the automobile and the bumper reinforcement 14 at the positions of both end portions 14A in the longitudinal direction (width direction as viewed in the vehicle body 12 of the automobile) of the bumper reinforcement 14.

### <Bumper Reinforcement>

The bumper reinforcement 14 may be formed of a metal plate material. For example, a steel plate material may be employed. For example, a high tensile strength steel material (tensile strength: 340 MPa to 790 MPa, also referred to as a high-tensile steel material), an ultra high tensile strength steel material (tensile strength: 980 MPa or more, also referred to as an ultra high-tensile steel material), or the like may be employed.

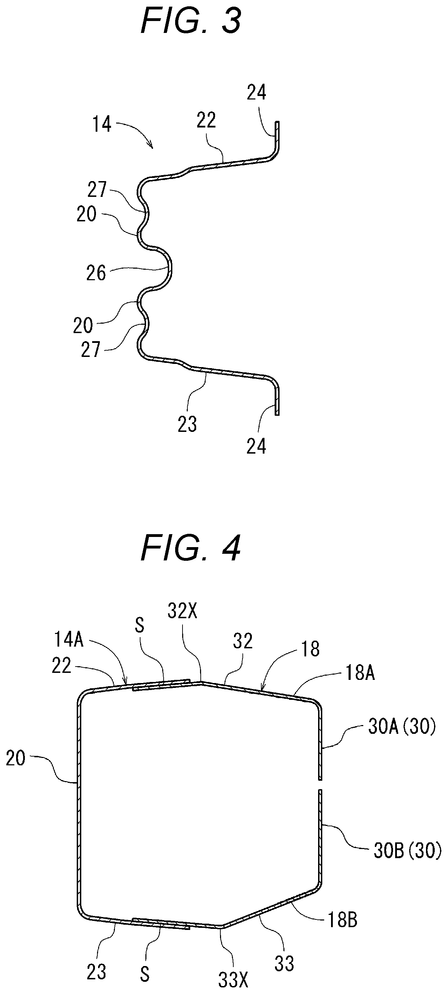

As shown in Fig. 3, the bumper reinforcement 14 is formed in a hat shape in a cross section orthogonal to the longitudinal direction thereof. The hat-shaped cross-sectional shape is formed by press molding as a shape having a side wall portion 20, an upper wall portion 22, a lower wall portion 23, and a flange portion 24. The press molding is performed by bending, drawing, or a combination thereof. Thus, the cross section of the bumper reinforcement 14 has a shape with no negative angle which makes die cutting difficult in the press molding.

As shown in Fig. 3, the hat-shaped cross section of the bumper reinforcement 14 has an open shape opened only on one side in the front-rear direction among four forward, rearward, upward, and downward directions. The cross section of the bumper reinforcement 14 has an open shape (hat shape) with the rear side opened. In the cross-sectional view of Fig. 3, the bumper reinforcement 14 has the upper wall portion 22 extending in the front-rear direction, the lower wall portion 23 extending in the front-rear direction, the side wall portion 20 connecting the upper wall portion 22 and the lower wall portion 23 on the front side, and the flange portions 24 extending from end portions of the upper wall portion 22 and the lower wall portion 23 to the opposite sides.

The upper wall portion 22 and the lower wall portion 23 extend rearward from both end portions of the side wall portion 20. The upper wall portion 22 and the lower wall portion 23 expand so as to increase a distance therebetween while extending rearward. This is an inclined shape in which the negative angle which makes the die cutting difficult is not formed. The flange portion 24 of the upper wall portion 22 is formed so as to extend outward (upward) in the up-down direction from the rear end portion of the upper wall portion 22. The flange portion 24 of the lower wall portion 23 is formed so as to extend outward (downward) in the up-down direction from the rear end portion of the lower wall portion 23.

As shown in Fig. 4, the bumper reinforcement 14 also has upper wall portions 22, lower wall portions 23, and side wall portions 20 at both end portions 14A. On the other hand, the end portion 14A of the bumper reinforcement 14 may not have the flange portions 24. However, although not illustrated, as another embodiment, the flange portion 24 may extend to the end portion 14A of the bumper reinforcement 14.

As one embodiment, a normal steel plate having a constant plate thickness may be used for the bumper reinforcement 14. Note that in the side wall portion 20, a concave bead 26 can be formed in the longitudinal direction at the center position of the side wall portion 20 in the width direction thereof in order to increase the strength in terms of shape. Further, a plurality of concave beads 27 may be intermittently formed above and below the concave bead 26 along the longitudinal direction. On the other hand, the end portion 14A of the bumper reinforcement 14 does not have the concave beads 26, 27.

### <Crash Box>

The crash box member 18 may be formed of a metal plate. For example, a steel plate material may be employed. For example, a high tensile strength steel material (tensile strength: 340 MPa to 790 MPa, also referred to as a high-tensile steel material), an ultra high tensile strength steel material (tensile strength: 980 MPa or more, also referred to as an ultra high-tensile steel material), an alloyed hot-dip galvanized steel sheet, a hot-dip galvanized steel sheet, or the like may be employed.

As shown in Fig. 4, the crash box member 18 has an open cross-sectional shape opened only on one side in the front-rear direction among four forward, rearward, upward, and downward directions as viewed in cross section. The crash box member 18 at the front portion of the vehicle body 12 has a shape with the front side opened. The crash box member 18 has an upper surface portion 32, a side surface portion 30, and a lower surface portion 33.

As one embodiment, the crash box member 18 may have a two-piece structure including an upper crash box member 18A and a lower crash box member 18B. In this case, the upper crash box member 18A and the lower crash box member 18B may both have, for example, an L-shaped cross section, and may be formed by a known progressive press molding process.

The upper crash box member 18A has an upper surface portion 32 and an upper side surface portion 30A. The upper surface portion 32 is a surface extending in the front-rear direction. The upper side surface portion 30A extends downward from a rear end portion of the upper surface portion 32 to form a surface shape. The upper surface portion 32 may be provided with an upper surface bent portion 32X bent upward.

The lower crash box member 18B has a lower surface portion 33 and a lower side surface portion 30B. The lower surface portion 33 is a surface extending in the front-rear direction. The lower side surface portion 30B extends upward from a rear end portion of the lower surface portion 33 to form a surface shape. The lower surface portion 33 may be provided with a lower surface bent portion 33X bent downward.

The side surface portion 30 includes both the upper side surface portion 30A and the lower side surface portion 30B. That is, the side surface portion 30 has the surface shape formed by the upper side surface portion 30A extending from the rear end portion of the upper surface portion 32 and the lower side surface portion 30B extending from the rear end portion of the lower surface portion 33. In other words, the crash box member 18 is divided into the upper side surface portion 30A and the lower side surface portion 30B at an intermediate portion of the side surface portion 30.

As shown in Fig. 2, the upper crash box member 18A and the lower crash box member 18B are joined together by spot welding. This figure shows some spot welding points S.

Although not illustrated, as another embodiment, the crash box member 18 may be an integrated member having a C-shaped cross-section instead of the two-piece structure described above.

### <Impact Absorbing Portion>

As shown in Fig. 4, the end portion 14A of the bumper reinforcement 14 and the crash box member 18 are joined with their openings facing each other to form a tubular or substantially closed impact absorbing portion. The crash box member 18 is joined such that the outer surface of the upper surface portion 32 and the outer surface of the lower surface portion 33 are in surface contact with the inner surface of the end portion 14A of the bumper reinforcement 14. Specifically, the outer surface (upper surface) of the upper surface portion 32 of the crash box member 18 is joined by spot welding in surface contact with the inner surface (lower surface) of the upper wall portion 22 of the end portion 14A of the bumper reinforcement 14. The outer surface (lower surface) of the lower surface portion 33 of the crash box member 18 is joined by spot welding in surface contact with the inner surface (upper surface) of the lower wall portion 23 of the end portion 14A of the bumper reinforcement 14.

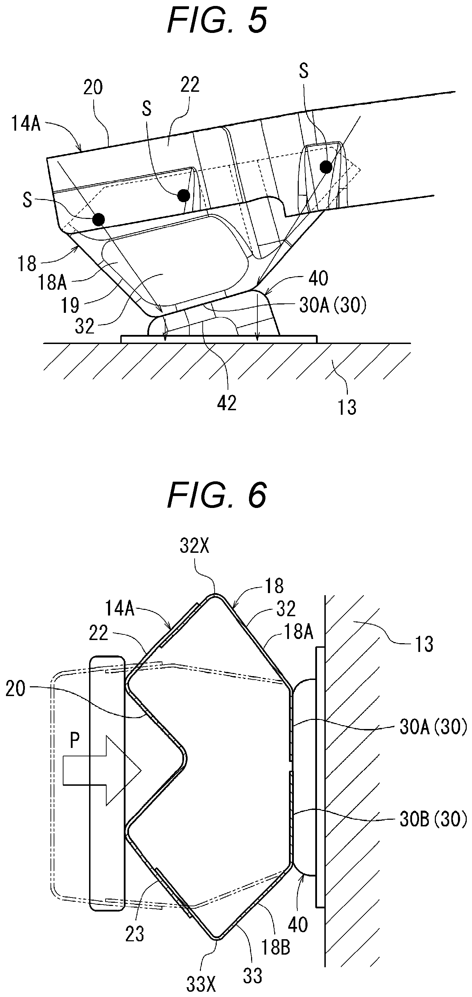

As shown in Figs. 2 and 5, the crash box member 18 is generally in a box shape. The crash box member 18 has, in the outer surface thereof, a ridgeline 19 (surface boundary) extending toward the vehicle body frame member 13. The crash box member 18 and the end portion 14A of the bumper reinforcement 14 are spot-welded at a position (spot welding point S) on the ridgeline 19 or at a position adjacent to the ridgeline 19. By setting the spot welding point S in the vicinity of the ridgeline 19 of the crash box member 18, which is a highly rigid portion, an impact load P is easily transmitted from the end portion 14A of the bumper reinforcement 14, which has received such a load, to the crash box member 18. This makes it possible to improve the efficiency of transmission of the impact load between components and to increase an energy absorption amount.

A portion of the bumper reinforcement 14 other than the end portion 14A may have an open cross section. However, although not illustrated, as another embodiment, a portion of the bumper reinforcement 14 other than the end portion 14A may have a closed cross section by closing the opening side (rear side) with a closing member. However, it is preferable that such a closing member is not continuous with the crash box member 18 so as not to impede independent deformation of the crash box member 18 for shock absorption.

### <Attachment Member>

As shown in Fig. 5, an attachment member 40 for attaching an assembly (bumper structure 10) including the bumper reinforcement 14 and the crash box member 18 to the vehicle body frame member 13 may be disposed between the crash box member 18 and the vehicle body frame member 13. The ridgeline 19 of the crash box member 18 is disposed toward a ridgeline 42 of the attachment member 40. By aligning the ridgeline 19 of the crash box member 18 and the ridgeline 42 of the attachment member 40, it is possible to improve the efficiency of the transmission of the impact load P between the components and increase the energy absorption amount. Note that the attachment member 40 itself may be designed not to absorb the impact.

### <Deformation Behavior of Bumper Structure upon Collision>

A deformation behavior when the impact load P is input to the vehicle to which the bumper structure according to the above-described embodiment is applied will be described with reference to Fig. 6. The impact load P acting on a center portion of the bumper structure 10 due to front collision of the automobile is first received by the bumper reinforcement 14. The load acting on the bumper reinforcement 14 is transmitted to the vehicle body 12 via the crash box members 18 disposed at both end portions of the bumper reinforcement 14. At this time, the impact absorbing portion formed by the end portion 14A of the bumper reinforcement 14 and the crash box member 18 is irreversibly deformed to absorb at least part of collision energy. That is, the end portion 14A of the bumper reinforcement 14 forms the crash box together with the crash box member 18.

Specifically, the crash box member 18 has the upper surface bent portion 32X and the lower surface bent portion 33X, which serve as a starting point (portion which induces deformation) of deformation of the impact absorbing portion when receiving the impact load P upon collision from the front. The upper surface bent portion 32X is further bent upward in response to the input of the impact load P. The lower surface bent portion 33X is further bent downward in response to the input of the impact load P. The crash box member 18 is subjected to irreversible deformation accompanied by absorption of the impact load P as the upper surface bent portion 32X and the lower surface bent portion 33X bulge outward in response to the input of the impact load P. At this time, the upper wall portion 22 and lower wall portion 23 of the end portion 14A of the bumper reinforcement 14 are deformed so as to expand outward along with the deformation of the upper surface bent portion 32X and lower surface bent portion 33X (deformation starting point) of the crash box member 18. That is, the impact load P is absorbed by the crash box formed by both the crash box member 18 and the end portion 14A of the bumper reinforcement 14. As described above, in the bumper structure 10 of the present embodiment, the area where the collision energy can be absorbed extends not only to the crash box member 18 but also to the end portion 14A of the bumper reinforcement 14, so that the energy absorption amount is improved.

For a three-point bending strength and required items for an energy absorption performance, required performances in the bumper structure 10 of the present embodiment were verified. As a result, the three-point bending strength satisfied the required performance. In addition, as a result of a center pendulum test, a corner pendulum test, and a damager test, both the energy absorption amount and the maximum load satisfied the required performance as the energy absorption performance.

### <Effects of Embodiment Above>

Finally, the advantageous effects of the embodiment above will be additionally described.

The bumper structure 10 has the bumper reinforcement 14 extending in the vehicle width direction, and the crash box members 18 provided between both end portions of the bumper reinforcement 14 and the vehicle body frame member 13. The end portion 14A of the bumper reinforcement 14 has the open cross-sectional shape with only one of the front side or the rear side opened, the crash box member 18 has the open cross-sectional shape with only one of the rear side or the front side opened, and the end portion 14A of the bumper reinforcement 14 and the crash box member 18 are joined with facing each other to form the tubular or substantially closed impact absorbing portion. The crash box member 18 has at least one deformation starting point serving as the starting point of the deformation of the impact absorbing portion when receiving the impact load P upon collision. Along with the deformation of the crash box member 18 starting from the deformation starting point, the end portion 14A of the bumper reinforcement 14 is also deformed in the bumper structure 10, so that the impact load P is absorbed by the impact absorbing portion formed by both the crash box member 18 and the end portion 14A of the bumper reinforcement 14. As a result, the area where the impact load P is absorbed extends not only to the crash box member 18 but also to the end portion 14A of the bumper reinforcement 14 (the end portion 14A of the bumper reinforcement 14 also forms the crash box), so that the energy absorption amount is improved. In addition, at least the end portion 14A of the bumper reinforcement 14 has the open cross-sectional shape, so that the bumper structure 10 is reduced in weight.

In some embodiments, the crash box member 18 has the upper surface portion 32 extending in the front-rear direction, the lower surface portion 33 extending in the front-rear direction, and the side surface portion 30 extending from the end portion of the upper surface portion 32 and the end portion of the lower surface portion 33 to form the surface shape. The upper surface portion 32 has the upper surface bent portion 32X at which the plate surface for functioning as the deformation starting point is bent, and the lower surface portion 33 has the lower surface bent portion 33X at which the plate surface for functioning as the deformation starting point is bent. In the crash box member 18, the upper surface bent portion 32X and the lower surface bent portion 33X are deformed so as to outwardly separate from each other in response to the input of the impact load P. The deformation starting point includes, as the bent portion at which the plate surface is bent, the upper surface bent portion 32X of the upper surface portion 32 and the lower surface bent portion 33X of the lower surface portion 33. Thus, the deformation behavior can be controlled by a simple configuration without employing a complicated configuration and without increasing the number of components.

In some embodiments, the crash box member 18 is joined such that the outer surface of the upper surface portion 32 and the outer surface of the lower surface portion 33 are in surface contact with the inner surface of the end portion 14A of the bumper reinforcement 14. The crash box member 18 easily takes, with the upper surface portion 32 and the lower surface portion 33, a deformation behavior of expanding (pushing outward) the upper wall portion 22 and lower wall portion 23 of the end portion 14A of the bumper reinforcement 14 outward, and easily deforms.

In some embodiments, the crash box member 18 is divided into the upper crash box member 18A and the lower crash box member 18B at the intermediate portion of the side surface portion 30. This is easily applicable to the progressive process.

In some embodiments, the crash box member 18 has, on the outer surface thereof, the ridgeline 19 extending toward the vehicle body frame member 13, and the crash box member 18 and the end portion 14A of the bumper reinforcement 14 are spot-welded at the position on the ridgeline 19 or the position adjacent to the ridgeline 19. By setting the spot welding point S in the vicinity of the ridgeline 19 of the crash box member 18, which is the highly rigid portion, the impact load P is easily transmitted from the end portion 14A of the bumper reinforcement 14, which has received such a load, to the crash box member 18. This makes it possible to improve the efficiency of the transmission of the impact load P between the components and to increase the energy absorption amount.

In some embodiments, the attachment member 40 for attaching the crash box member 18 is disposed between the crash box member 18 and the vehicle body frame member 13, and the ridgeline 19 of the crash box member 18 is disposed toward the ridgeline 42 of the attachment member 40. By aligning the ridgeline 19 of the crash box member 18 and the ridgeline 42 of the attachment member 40, it is possible to improve the efficiency of the transmission of the impact load P between the components and increase the energy absorption amount.

Although various embodiments have been described above, the technique disclosed herein is not limited to those embodiments, and those skilled in the art can make various modifications, additions, and omissions.

## Claims

1. A bumper structure for a vehicle, comprising:
a bumper reinforcement extending in a vehicle width direction; and
a crash box member provided between each end portion of the bumper reinforcement and a vehicle body frame member,
wherein the end portion of the bumper reinforcement has an open cross-sectional shape with only one of a front side or a rear side opened, the crash box member has an open cross-sectional shape with only one of a rear side or a front side opened, and the end portion of the bumper reinforcement and the crash box member are joined with facing each other to form a tubular or substantially closed impact absorbing portion,
the crash box member has at least one deformation starting point which serves as a starting point of deformation of the impact absorbing portion when receiving an impact load upon collision, and
by also deforming the end portion of the bumper reinforcement along with deformation of the crash box member starting from the deformation starting point, the impact load is absorbed by the impact absorbing portion formed by both the crash box member and the end portion of the bumper reinforcement.

2. The bumper structure for the vehicle according to claim 1, wherein
the crash box member has
an upper surface portion extending in a vehicle front-rear direction,
a lower surface portion extending in the vehicle front-rear direction, and
a side surface portion extending from an end portion of the upper surface portion and an end portion of the lower surface portion to form a surface shape,
the upper surface portion has an upper surface bent portion functioning as the deformation starting point,
the lower surface portion has a lower surface bent portion functioning as the deformation starting point, and
the crash box member is deformed such that the upper bent portion and the lower bent portion outwardly separate from each other in response to an input of the impact load.

3. The bumper structure for the vehicle according to claim 2, wherein
the crash box member is joined such that an outer surface of the upper surface portion and an outer surface of the lower surface portion are in surface contact with an inner surface of the end portion of the bumper reinforcement.

4. The bumper structure for the vehicle according to claim 2 or 3,
wherein
the crash box member is divided into an upper crash box member and a lower crash box member at an intermediate portion of the side surface portion.

5. The bumper structure for the vehicle according to claim 4, wherein
the crash box member has, on an outer surface thereof, a ridgeline extending toward the vehicle body frame member, and
the crash box member and the end portion of the bumper reinforcement are spot-welded at a position on the ridgeline or a position adjacent to the ridgeline.

6. The bumper structure for the vehicle according to claim 4, wherein
the crash box member is attached via an attachment member provided on a vehicle body frame member side, and
a ridgeline of the crash box member is disposed toward a ridgeline of the attachment member.
